**Europäisches Patentamt**

(19) **European Patent Office**

**Office européen des brevets**

(11) Veröffentlichungsnummer: **0 014 192
B1**

(12) # EUROPÄISCHE PATENTSCHRIFT

(45) Veröffentlichungstag der Patentschrift:
28.03.84

(51) Int. Cl.³: **F 24 J 3/02, E 04 D 5/06,
E 04 D 13/00, E 04 B 1/76**

(21) Anmeldenummer: **80890006.2**

(22) Anmeldetag: **16.01.80**

(54) **Wand- oder Dachverkleidung.**

(30) Priorität: **19.01.79 AT 400/79
09.01.80 AT 93/80**

(73) Patentinhaber: **Imhof, Jörg, Dr. Dipl.-Ing.,
A-9601 Arnoldstein Nr. 202 (AT)**

(43) Veröffentlichungstag der Anmeldung:
**06.08.80 Patentblatt 80/16**

(72) Erfinder: **Imhof, Jörg, Dr. Dipl.-Ing., A-9601 Arnoldstein
Nr. 202 (AT)**

(45) Bekanntmachung des Hinweises auf die Patenterteilung:
**28.03.84 Patentblatt 84/13**

(74) Vertreter: **Beer, Otto, Dipl.-Ing. et al, Lindengasse 8,
A-1071 Wien (AT)**

(84) Benannte Vertragsstaaten:
**AT BE CH DE FR GB IT LU NL SE**

(56) Entgegenhaltungen:
**CH - A - 231 449
DE - A - 2 436 986
DE - A - 2 442 529
DE - A - 2 657 399
DE - A - 2 657 468
DE - A - 2 720 824
DE - A - 2 747 850
DE - C - 941 793
DE - C - 1 044 123
FR - A - 926 146
FR - A - 1 297 866
FR - A - 2 138 418
NL - A - 7 411 523
US - A - 2 986 014
US - A - 3 022 781**

(56) Entgegenhaltungen: (Fortsetzung)
**US - A - 4 059 095
US - A - 4 079 726**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Wand- oder Dachverkleidung

Die Erfindung betrifft eine Wand- oder Dachverkleidung mit Bahnen, die zur Absorption von Strahlungs- und/oder Umgebungswärme insbesondere parallel zueinander verlaufende Strömungskanäle für ein Wärmeübertragungsmedium aufweisen und die aus flexiblem, vorzugsweise zumindest teilweise aus armiertem, insbesondere gewebeverstärktem Kunststoff, z.B. plastomerem oder elastomerem Werkstoff, vorzugsweise Polyvinylchlorid, gefertigt sind.

Herkömmliche Wand- oder Dachverkleidungen können nicht zur Wärmegewinnung herangezogen werden. Anderseits kommen die bisher bekannten Sonnenkollektoren wegen ihres aufwendigen Aufbaues für eine Abdeckung einer gesamten Dachfläche oder zur Fassadenverkleidung nicht in Frage und ihre Verwendung stösst oft aus ästhetischen Gründen auf Ablehnung.

Es sind auch schon flexible Sonnenkollektoren vorgeschlagen worden. So beschreibt die US-A-4059095 eine aufrollbare Matte, die von einem schlangenlinien förmigen Kanal durchzogen ist. Diese Matte ist zur Vorwärmung von Wasser für Schwimmbecken bestimmt. An eine Verwendung dieser Matte als Verkleidungsmaterial ist nicht gedacht. Weitere flexible Wärmeabsorber sind z.B. in der DE-A-2442529, der US-A-3022781 und der CH-A-597572 beschrieben, wobei in der DE-A-2442529 auch die Verwendung des Wärmeabsorbers als Verkleidung erwähnt ist.

Weiters ist es bei Eisbereitungsmaschinen bekannt (vgl. NL-A-7411523, DE-C-1044123 und FR-A-1297866), das gebildete Eis von den Kühlflächen durch Bewegen und/oder Verformen derselben abzusprengen. Aus der CH-A-231449 ist es bekannt, Eis von einem in Wasser untergetauchten Wärmetauscher, der als Verdampfer direkt in den Kreislauf einer Wärmepumpe geschaltet ist, abzusprengen.

Obwohl es für Eisbereitungsmaschinen und eine Wärmepumpenanlage bekannt ist, Eis von Wärmeabsorberoberflächen abzusprengen, hat dieser Gedanke in der Praxis bei Anlagen zur Aufnahme von Strahlungs- und/oder Umgebungswärme keinen Eingang gefunden. Dies, obwohl es dem Fachmann bekannt ist, dass der Eis- bzw. Schneebesatz an Wärmeabsorbern, der natürlich die Wärmeaufnahme beeinträchtigt, insbesondere bei Temperaturen unter +3°C ein Problem ist. Vielmehr wird in der Praxis stets vorgeschlagen, den Wärmeabsorber einfach abzuschalten oder in einem Abtauzyklus dem Wärmeabsorber zum Abtauen Wärme zuzuführen.

Aufgabe der Erfindung ist es, eine Wand- oder Dachverkleidung der eingangs genannten Art zu schaffen, die es gestattet, eine Gebäudeverkleidung, z.B. die Gebäudeabdeckung, zusätzlich zu ihrer Funktion als Schutz gegen Witterungseinflüsse auch zur Wärmegewinnung durch Absorption der eingestrahlten Sonnenenergie und zur Gewinnung von Wärme aus der Umgebung heranzuziehen, wobei die Wand- oder Dachverkleidung auch ohne Wärmezufuhr stets eis- und schneefrei gehalten werden können soll.

Mit der Erfindung wird diese Aufgabe dadurch gelöst, dass die Strömungskanäle eine im wesentlichen tropfenförmige Umrissform besitzen, wodurch durch Ändern des Druckes des Wärmeübertragungsmediums in den Strömungskanälen die Aussenform der Bahnen und/oder die Grösse des Querschnittes der Strömungskanäle veränderbar ist.

Die erfindungsgemässe Wand- oder Dachverkleidung ist in endlosen Bahnen gefertigt, von welchen Bahnen die zur Eindeckung und Ummantelung von Dächern, Wänden und Fassaden benötigten Stücke abgelängt werden können. Diese Bahnen können an den zu verkleidenden Flächen, z.B. an einer Wand, unmittelbar anliegen. Die erfindungsgemässe Wand- oder Dachverkleidung ist flexibel-elastisch ausgebildet und hat somit selbst keine statisch tragenden Funktionen.

Durch die Flexibilität des erfindungsgemäss vorgeschlagenen Verkleidungsmaterials ergeben sich gegenüber den bekannten starren Systemen, wie sie z.B. aus der AT-B-273440 bekannt sind, wesentliche Vorteile.

Bei Kombination der erfindungsgemässen Wand- oder Dachverkleidung mit einer Wärmepumpe kann der Luft bei jeder beliebigen Temperatur Wärme entzogen werden, wenn nur die Temperatur des Wärmeübertragungsmediums kleiner gehalten wird als jene der Umgebung. Dies ist bei den bekannten Luft-Wärmepumpenanlagen nur möglich, weil die Wärmetauschflächen periodisch durch Abtauen enteist werden. Dieses Abtauen erfordert Energie, die dem Wärmetauscher zugeführt werden muss und von diesem an die Umgebung abgegeben wird. Der dabei auftretende Energieverlust macht diese bekannten Systeme unwirtschaftlich, so dass Luft-Wärmepumpensysteme bisher für Temperaturen unter dem Gefrierpunkt nicht empfohlen werden konnten, weil z.B. bei höherer Luftfeuchtigkeit die Enteisungszyklen mehr Energie zum Abtauen erforderlich machten, als durch Wärmeentzug während des Kühlzyklus der Umgebungsluft entzogen werden konnte.

Bei der erfindungsgemässen Wand- oder Dachverkleidung gestattet es die flexible Wärmetauscheroberfläche, dass durch eine Änderung des Druckes in den Strömungskanälen eine Verkleinerung (Druckverminderung) bzw. eine Vergrösserung (Drucksteigerung) der Wärmetauscheroberfläche und eine Änderung ihrer Aussenform herbeigeführt werden kann. Durch einfaches Ändern des Druckes in den Strömungskanälen kann somit Eis und dgl. auf einfachste Art und Weise abgelöst werden. Ist zusätzlich die Neigung des Daches so gewählt, dass das Eis abrutscht, so kann das Dach und somit die gesamte Wärmetauscheroberfläche ständig eisfrei gehalten werden. Dabei wird vom System aber keine Energie an die Umgebung abgegeben, da die bisher benötigten Abtauzyklen entfallen können. Die gesamte Oberfläche des erfindungsgemässen Verkleidungsmaterials steht ständig für eine Wärmeaufnahme aus der Umgebung zur Verfügung. Dies gilt sowohl für Dachverkleidungen als auch für senkrecht montierte Fassadenverkleidungen.

Die bei der erfindungsgemässen Wand- oder Dachverkleidung möglichen Änderungen der Form der Verkleidung dienen nicht nur zum Ablösen von Eis- oder Schneebesatz von der Oberfläche des Wärmeabsorbers, sondern auch dazu, die Grösse der wirksamen Oberfläche des Wärmeabsorbers je nach Bedarf zu vergrössern oder zu verkleinern.

Weiters ergibt sich bei der Erfindung die Möglichkeit, die Querschnittsfläche der Strömungskanäle je nach Wunsch zu vergrössern oder zu verkleinern und damit auch die in den Strömungskanälen enthaltene Menge an Wärmeübertragungsmedium den jeweiligen Betriebbedingungen anzupassen.

Diese Effekte ergeben sich durch die im wesentlichen tropfenförmige Umrissform der Strömungskanäle.

Die Wand- oder Dachverkleidung ist aus flexiblem Kunststoff hergestellt. Kunststoffe können sowohl in ihrer Form als auch in ihren Eigenschaften wesentlich leichter als metallische Werkstoffe ihren Verwendungszwecken und dessen Anforderungen angepasst werden. Sie können beispielsweise so eingestellt werden, dass sie neben der hohen Korrosionsbeständigkeit auch ein sehr gutes Tieftemperaturverhalten, eine gute Witterungs- und Lichtbeständigkeit wie auch eine gute Strahlungsabsorption aufweisen und gleichzeitig alle mechanischen Anforderungen erfüllen. Zusätzlich können Kunststoffe durch ihre leichte Verformbarkeit praktisch in jede beliebige Form gebracht werden und es können somit auch alle ästhetischen Wünsche berücksichtigt werden. Die einfache Verarbeitung des fertigen Werkstückes ermöglicht ausserdem eine sehr einfache Verlegung des erfindungsgemässen Verkleidungsmaterials und schliesslich kann durch richtige Auswahl des Kunststoffes jede Brand- bzw. Baunorm erfüllt werden.

Es ist vorteilhaft, wenn die erfindungsgemässe Wand- oder Dachverkleidung aus lichtstabil und/oder flammwidrig und/oder temperaturbeständig ausgerüstetem Kunststoff bzw. Plastwerkstoff, vorzugsweise aus PVC, besteht. Ein weiterer Werkstoff, der sich besonders gut eignet, ist EPDM (Äthylen-Propylen-Dien-Polymer) und CSM (sulfochloriertes Polyäthylen). Insbesondere im Hinblick auf die Wärme- und Schalldämmung ist es vorteilhaft, wenn die Verkleidung einseitig, insbesondere unterseitig, mit einer Schicht aus wärme- und/oder schalldämmendem Werkstoff, wie beispielsweise Mineralwolle, Schaumstoff oder dgl., beschichtet ist.

Die Abmessung der Bahnen der erfindungsgemässen Wand- oder Dachverkleidung richtet sich nach dem Verwendungszweck. Die Verkleidung kann in Rollen gelagert und bahnenweise verlegt werden. Die Breite der Bahn wird von der Handlichkeit bestimmt. Die einzelnen Stücke werden einfach durch Abrollen und Abschneiden der Bahn auf das gewünschte Mass gebracht. Die Bahnen können so verlegt werden, dass das Wärmeübertragungsmedium die Fliesskanäle in dem Verkleidungsmaterial aufsteigend durchströmt. Eine horizontale Durchströmung wird man wählen, wenn der Druckabfall in den Fliesskanälen klein sein soll.

Nebeneinanderliegende Bahnen der erfindungsgemässen Wand- oder Dachverkleidung können stumpf aneinanderstossend verlegt und durch unmittelbares Verkleben oder dgl. oder aber durch Klebstreifen dichtend zu grösseren Einheiten verbunden werden. Die Bahnen können an ihren Längsseitenrändern Lappen zur Verbindung mit benachbarten Bahnen zwecks Herstellung grossflächiger Einheiten aufweisen. Die Lappen zweier aneinanderschliessender Bahnen können dann stumpfstossend oder überlappend verlegt und miteinander verbunden werden und erleichtern zusätzlich die Befestigung des Verkleidungsmaterials. Bei einer überlappenden Verlegung der Lappen ist es vorteilhaft, wenn die Lappen auf der einen Seite der Bahn höher angeordnet sind als die Lappen auf der anderen Seite der Bahn.

Eine vorteilhafte Ausbildungsform des erfindungsgemässen Verkleidungsmaterials ist dadurch gekennzeichnet, dass die Strömungskanäle von streifenförmigen Folien gebildet sind, deren Längsränder vorzugsweise aufeinanderliegend an einem Träger, z.B. einer Trägerfolie, befestigt sind.

Gemäss einer weiteren Ausführungsform der Erfindung ist vorgesehen, dass die Strömungskanäle einander überlappen, wobei der bauchige Teil der Strömungskanäle auf dem spitz zulaufenden Teil des Querschnittes des jeweils unter ihm angeordneten Strömungskanales aufliegt.

Wenn die Grösse und/oder die Form des Querschnittes der Strömungskanäle nicht oder nicht ausschliesslich durch Änderung des Druckes im Wärmeübertragungsmedium geändert werden soll, dann bewährt sich eine Ausführungsform der Erfindung, die dadurch gekennzeichnet ist, dass in den Bahnen zu den Strömungskanälen vorzugsweise parallel verlaufende, zusätzliche Kanäle vorgesehen sind, in denen ein flüssiges oder gasförmiges Medium enthalten ist, wodurch ausser durch Ändern des Druckes des Wärmeübertragungsmediums in den Strömungskanälen auch durch Ändern des Druckes des Mediums in den zu den Strömungskanälen vorzugsweise parallel verlaufenden Kanälen die Aussenform der Bahnen und/oder die Grösse des Querschnittes der Strömungskanäle veränderbar ist.

Bei dieser Ausführungsform ist es möglich, dass jedem Strömungskanal ein Kanal, in dem das mit verschieden hohen Drücken beaufschlagbare Medium enthalten ist, zugeordnet ist oder dass jedem Kanal, in dem das mit verschieden hohen Drücken beaufschlagbare Medium enthalten ist, mehrere Strömungskanäle zugeordnet sind.

Eine weitere Ausführungsform besteht erfindungsgemäss darin, dass die Strömungskanäle eine im wesentlichen tropfenförmige Umrissform besitzen und dass von jedem Strömungskanal durch eine längslaufende Trennwand aus flexiblem Werkstoff ein Kanal für das mit verschieden hohen Drücken beaufschlagbare Medium abgetrennt ist. Bei dieser Ausführungsform liegen die einzelnen Strömungskanäle flach an der Trägerfolie an und nehmen erst dann die im wesentlichen tropfenförmige Querschnittsform ein, wenn sie z.B. vom Wärmeübertragungsmedium mit Druck beaufschlagt sind.

Weitere Einzelheiten und Merkmale der Erfindung ergeben sich aus der nachfolgenden Beschreibung der in den Zeichnungen schematisch wiedergegebenen Ausführungsbeispiele. Es zeigt

Figur 1 im Schnitt eine erste Ausführungsform der Wand- oder Dachverkleidung,

Figur 2 die Ausführungsform aus Figur 1 in einem Betriebszustand und

Figur 3 im Schnitt eine weitere Ausführungsform der Wand- oder Dachverkleidung.

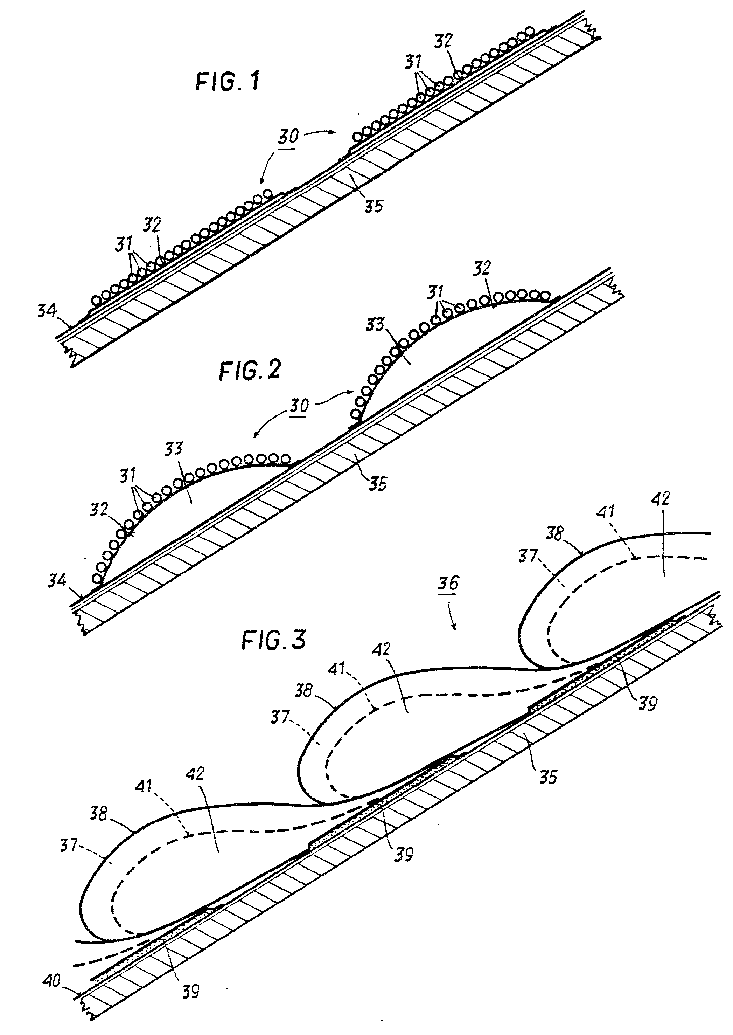

Bei dem in Figur 1 und 2 gezeigten Ausführungsbeispiel einer Bahn 30 der Wand- oder Dachverkleidung sind die Strömungskanäle 31 auf einer Grundfolie 32 angeordnet. Die Grundfolie 32 ist unter Bildung eines weiteren Kanals 33 auf einer Trägerfolie 34 befestigt, die ihrerseits mit einer Unterlage 35 z.B. durch Kleben verbunden werden kann. Durch Druckbeaufschlagung eines in den Kanälen 33 enthaltenen, flüssigen oder gasförmigen Mediums werden die Kanäle 33 aufgeweitet und die Aussenform der die Strömungskanäle 31 aufweisenden Bahn 30 geändert. Die Erhöhung oder auch eine Reduzierung des Druckes des in den Kanälen 33 enthaltenen Mediums kann anstelle oder zugleich mit einer Druckänderung des Wärmeübertragungsmediums in den Strömungskanälen 31 erfolgen. Die in den Figuren 1 und 2 gezeigte Ausführungsform der erfindungsgemässen Verkleidung ermöglicht eine wesentlich verstärkte Formänderung der Aussenfläche der Bahnen und gestattet somit einen weiter verbesserten Abwurf von Eis- oder Schneebesatz, insbesondere auch bei flacheren Dächern.

In Figur 3 ist eine als Faltenabsorber ausgebildete Bahn 36 wiedergegeben. Die Strömungskanäle 37 der Bahn 36 werden hier von längsgefalteten Folienstreifen 38 begrenzt, die im Bereich 39 an einer Trägerfolie 40 befestigt sind. Die Trägerfolie 40 ist wieder auf einer Unterlage 35 zu befestigen. Innerhalb der von den Folienstreifen 38 begrenzten Strömungskanäle 37 ist eine weitere Trennwand 41 aus flexiblem Werkstoff vorgesehen, die einen Kanal 42 begrenzt. Im Strömungskanal 37 fliesst das Wärmeübertragungsmedium, wogegen der Kanal 42 – ähnlich wie der Kanal 33 aus Figur 1 und 2 – unabhängig hievon mit einem Druckmedium beaufschlagt werden kann.

Bei der Ausführungsform nach Figur 3 sind die Strömungskanäle 37 als Falten ausgebildet und besitzen eine im wesentlichen tropfenförmige Querschnittsform. Die Folienstreifen 38 sind im Extremfall linienförmig an ihren freien Kanten auf der Trägerfolie 40 oder einer sonstigen Unterlage befestigt. Werden mehrere solche im Querschnitt tropfenförmige Strömungskanäle 37, die aus einem Werkstoff mit der nötigen Elastizität und Flexibilität bestehen, einander teilweise überlappend auf der Trägerfolie 40 befestigt und waagrecht auf einem Dach angeordnet, dann entsteht ein optischer Eindruck ähnlich einem herkömmlichen Dach. Sobald durch die Strömungskanäle 37 das Wärmeübertragungsmedium fliesst, dann werden sich diese je nach dem Druck des Wärmeübertragungsmediums mehr oder weniger weit aufstellen und die Aussenform sowie die Querschnittsform der Kanäle 37 geändert. Durch die Überlappung der Strömungskanäle 37 wird die gesamte zur Verfügung stehende Fläche zur Wärmeabsorption oder zum Wärmetausch ausgenützt.

Die Befestigung der die Falten bildenden Folienstreifen 38 kann z.B. durch Nähen, Kleben oder Verschweissen erfolgen. Es ist aber auch möglich, die die Strömungskanäle 37 begrenzenden Folienstreifen 38 mit der Trägerfolie 40 einstückig herzustellen. Weiters ist es denkbar, die Folienstreifen 38 unmittelbar auf einem Dach zu montieren, wobei die Dachhaut, z.B. eine Dachpappe oder dgl., die Funktion der Trägerfolie 40 übernimmt. Die Befestigung kann – ähnlich wie die Befestigung auf der Trägerfolie 40 – durch Nähen, Kleben, Schweissen, Nageln oder dgl. erfolgen.

Das Wärmeübertragungsmedium kann auf verschiedene Arten zugeführt werden, wobei die Zuführung auch über in die Enden der Strömungskanäle 37 eingesetzte Rohrstücke erfolgen kann. Eine andere Möglichkeit ist die Verwendung von Verteiler- oder Sammelkanalleisten für das Wärmeübertragungsmedium, die an die offenen Enden der Strömungskanäle 37 angeschlossen werden.

Falls die von den Folienstreifen 38 umgrenzten Strömungskanäle 37 durch eine Trennwand 41 unterteilt sind, wird bevorzugt in den aussen liegenden Strömungskanälen 37 das Wärmeübertragungsmedium strömen, wogegen in den Kanälen 42 durch ein flüssiges oder gasförmiges Druckmedium ein Gegendruck aufgebaut wird, der die Trennwand 41 nach aussen drückt. Hierdurch kann der freie Querschnitt der Strömungskanäle 37 auf den gewünschten Wert eingestellt werden. Auf diese Weise kann auch die Durchflussmenge des Wärmeübertragungsmedium auf einfache Weise geregelt werden. Wird eine hohe Durchflussmenge erwünscht, so wird durch einfache Druckminderung des im Kanal 42 enthaltenen Mediums der Gegendruck auf die Strömungskanäle 37 vermindert, wodurch die Trennwand 41 nachgibt und mehr Wärmeübertragungsmedium durch den Faltenabsorber strömen kann.

Der Folienstreifen 38 der Strömungskanäle 37 kann aus transparentem Werkstoff hergestellt sein. Wird der äussere Strömungskanal 37 mit dem Druckmedium, z.B. mit Luft, beaufschlagt und das Wärmeübertragungsmedium jetzt durch die Kanäle 42 geleitet, dann ist die Bahn 36 als reiner Sonnenkollektor verwendbar.

Die zuvor für die Bahn 36 gemäss Figur 3 beschriebene Möglichkeit der Änderung des Querschnittes der Fliesskanäle 37 ist auch bei den in Figur 1 und 2 gezeigten Ausführungsformen möglich. Auch bei diesen Ausführungsformen kann durch eine Änderung des Druckes im Wärmeübertragungsmedium eine Vergrösserung bzw. eine Verkleinerung der Querschnittsfläche der Fliesskanäle bewirkt werden. Es besteht somit die Möglichkeit, die in der erfindungsgemässen Wand- oder Dachverkleidung enthaltene Menge an Wärmeübertragungsmedium den jeweiligen Betriebsbedingungen, z.B. der Aussentemperatur und/oder der Intensität der Sonneneinstrahlung, entsprechend anzupassen.

Wie bereits angedeutet, kann die erfindungsgemässe Wand- oder Dachverkleidung durch Kombination mit einer Wärmepumpe zur Wärmegewinnung aus der Umgebung verwendet werden. Durch eine entsprechende Steuerung ist es möglich, die Temperatur des Wärmeübertragungsmediums unter der Umgebungstemperatur zu halten, wodurch eine Abgabe einmal aufgenommener Wärme an die Umgebung physikalisch unmöglich wird.

Die Kanäle 33 müssen nicht parallel zu den Strömungskanälen 31 verlaufen. Sie können in beliebigem Winkel, z.B. senkrecht, zu diesen verlaufen.

Der Bereich 39, in dem die Folienstreifen 38 befestigt sind, kann zwei im Abstand voneinander angeordnete Schweissnähte umfassen, zwischen welchen die Bahn 36 am Dach oder an einer Fassade z.B. durch Nageln befestigt werden kann. Es ist auch möglich, die Bahnen z.B. mittels Bitumen auf einer Unterlage anzukleben.

Als Werkstoff für die Verkleidung eignen sich alle elastomeren oder plastomeren Werkstoffe, so auch Kautschuk.

Die erfindungsgemässe Verkleidung kann auch aus armierten Folien, insbesondere gewebeverstärkten Folien gefertigt sein. Dies gilt insbesondere für die Ausführungsform nach Figur 3 und für die Trägerfolien der in den Figuren 1, 2 und 3 gezeigten Ausführungsformen und bei letzterer auch für die Trennwand 41.

Die Armierung kann aus Polyamid. Polyester und dort, wo eine besonders gute Wärmeleitung erwünscht ist, aus Metall bestehen.

Für bestimmte Fälle, z.B. insbesondere wenn es auf eine hohe UV-Beständigkeit ankommt, kann zumindest die Aussenseite der erfindungsgemässen Verkleidung aus metallisierter, z.B. schwarz metallisierter, Kunststoffolie bestehen.

**Patentansprüche**

1. Wand- oder Dachverkleidung mit Bahnen (36), die zur Absorption von Strahlungs- und/oder Umgebungswärme parallel zueinander verlaufende Strömungskanäle (37) für ein Wärmeübertragungsmedium aufweisen und die aus flexiblem, vorzugsweise zumindest teilweise aus armiertem, insbesondere gewebeverstärktem Kunststoff, z.B. plastomerem oder elastomerem Werkstoff, vorzugsweise Polyvinylchlorid, gefertigt sind, dadurch gekennzeichnet, dass die Strömungskanäle (37) eine im wesentlichen tropfenförmige Umrissform besitzen, wodurch durch Ändern des Druckes des Wärmeübertragungsmediums in den Strömungskanälen (37) die Aussenform der Bahnen (36) und/oder die Grösse des Querschnittes der Strömungskanäle (37) veränderbar ist.

2. Verkleidung nach Anspruch 1, dadurch gekennzeichnet, dass die Strömungskanäle (37) von streifenförmigen Folien (38) gebildet sind, deren Längsränder vorzugsweise aufeinanderliegend an einem Träger, z.B. einer Trägerfolie (40), befestigt sind.

3. Verkleidung nach Anspruch 1 oder 2, dadurch gekennzeichnet, dass die Strömungskanäle (37) einander überlappen, wobei der bauchige Teil der Strömungskanäle (37) auf dem spitz zulaufenden Teil des Querschnittes des jeweils unter ihm angeordneten Strömungskanales (37) aufliegt (Figur 3).

4. Wand- oder Dachverkleidung mit Bahnen (30, 36), die zur Absorption von Strahlungs- und/oder Umgebungswärme parallel zueinander verlaufende Strömungskanäle (31, 37) für ein Wärmeübertragungsmedium aufweisen und die aus flexiblem, vorzugsweise zumindest teilweise aus armiertem, insbesondere gewebeverstärktem Kunststoff, z.B. plastomerem oder elastomerem Werkstoff, vorzugsweise Polyvinylchlorid, gefertigt sind, dadurch gekennzeichnet, dass in den Bahnen (30, 36) zu den Strömungskanälen (31, 37) vorzugsweise parallel verlaufende, zusätzliche Kanäle (33, 42) vorgesehen sind, in denen ein flüssiges oder gasförmiges Medium enthalten ist, wodurch ausser durch Ändern des Druckes des Wärmeübertragungsmediums in den Strömungskanälen (31, 37) auch durch Ändern des Druckes des Mediums in den zu den Strömungskanälen vorzugsweise parallel verlaufenden Kanälen (33, 42) die Aussenform der Bahnen (30, 36) und/oder die Grösse des Querschnittes der Strömungskanäle (31, 37) veränderbar ist.

5. Verkleidung nach Anspruch 4, dadurch gekennzeichnet, dass jedem Strömungskanal (37) ein Kanal (42), in dem das mit verschieden hohen Drücken beaufschlagbare Medium enthalten ist, zugeordnet ist (Figur 3).

6. Verkleidung nach Anspruch 4, dadurch gekennzeichnet, dass jedem Kanal (33), in dem das mit verschieden hohen Drücken beaufschlagbare Medium enthalten ist, mehrere Strömungskanäle (31) zugeordnet sind (Figur 1, 2).

7. Verkleidung nach Anspruch 5, dadurch gekennzeichnet, dass die Strömungskanäle (37) eine im wesentlichen tropfenförmige Umrissform besitzen und dass von jedem Strömungskanal (37) durch eine längslaufende Trennwand (41) aus flexiblem Werkstoff ein Kanal (42) für das mit verschieden hohen Drücken beaufschlagbare Medium abgetrennt ist (Figur 3).

**Claims**

1. Covering material for walls or roofs comprising webs (36) which for the absorption of radiant and/or environmental heat have flow channels (37) running parallel to each other for a heat transfer medium and which are made of flexible, preferably at least partially of reinforced, in particular fabric reinforced synthetic material for example plastomer or elastomer material preferable poly-vinylchloride, characterized in that the flow channels (37) have a in general drop-shaped contour, whereby the external shape of the webs (36) and/or the size of the cross-section of the flow channels (37) is variable by change of the pressure of the heat transfer medium in the flow channels (37).

2. Covering material according to claim 1, characterized in that the flow channels (37) are formed by striplike foils (38), the longitudinal edges of which preferably in overlapping manner are connected to a support for example to a supporting foil (40).

3. Covering material according to claims 1 or 2, characterized in that the flow channels (37) overlap each other, whereby the bulgy portion of the flow channels (37) rests upon the tapered portion of the cross-section of the flow channels (37) respectively lying underneath (figur 3).

4. Covering material for walls or roofs comprising webs (30, 36), which for the absorption of radiant – and/or environmental heat have flow channels (31, 37) running parallel to each other for a heat transfer medium and which are made of flexible, preferably at least partially of reinforced in particular fabric reinforced synthetic material for example plastomer or elastomer material preferable poly-vinylchloride, characterized in that additional channels (33, 42) are provided in the webs (30, 36) preferably running parallel to the flow channels (31, 37), in which is contained a liquid or gaseous medium, whereby the external shape the webs (30, 36) and/or the size of the cross-section of the flow channels (31, 37) is variable besides by change of the pressure of the heat transfer medium in the flow channels (31, 37) also by change of the pressure of the medium in the channels (33, 42) preferably running parallel to the flow channels.

5. Covering material according to claim 4, characterized in that to each flow channel (37) one channel (33) is coordinated in which is contained the medium to be pressurized with different high pressures (figur 3).

6. Covering material according to claim 4, characterized in that to each channel (33) in which is contained the medium to be pressurized with different high pressures is coordinated a plurality of flow channels (31) (figur 1, 2).

7. Covering material according to claim 5, characterized in that the flow channels (37) have a in general dropshaped contour and that a channel (42) for the medium to be pressurized with different high pressures is divided off from each flow channel (37) by a longitudinally extending partition (41) of flexible material (figur 3).

**Revendications**

1. Revêtement de mur ou de toit fait de bandes de matériau (36) qui, pour absorber la chaleur du rayonnement et/ou la chaleur du milieu ambiant, comprennent des canaux de circulation (37) parallèles entre eux pour un fluide caloporteur et qui sont réalisées en matière plastique flexible, de préférence au moins en partie en matière plastique armée, notamment renforcée par du tissu, comme un plastomère ou un élastomère, de préférence le chlorure de polyvinyle, caractérisé en ce que les canaux de circulation (37) ont un profil substantiellement comme celui d'une goutte, de sorte qu'en faisant varier la pression du fluide caloporteur dans les canaux de circulation (37), on peut modifier la forme extérieure des bandes de matériau (36) et/ou la grandeur de la section droite des canaux de circulation (37).

2. Revêtement selon la revendication 1 caractérisé en ce que les canaux de circulation (37) sont constitués par des feuilles (38) découpées en bandes dont les bords longitudinaux, de préférence placés l'un sur l'autre, sont fixés à un support tel qu'une feuille porteuse (40).

3. Revêtement selon la revendication 1 ou 2 caractérisé en ce que les canaux de circulation (37) se recouvrent les uns les autres de sorte que la partie ventrue des canaux de circulation (37) repose sur la partie se terminant en pointe de la section droite du canal de circulation (37) disposé sous le précédent.

4. Revêtement de mur ou de toit fait de bandes de matériau (30, 36) qui, pour absorber la chaleur de rayonnement et/ou la chaleur du milieu ambiant, comprend des canaux de circulation (31, 37) parallèles entre eux pour un fluide caloporteur et réalisés en matière plastique flexible, de préférence au moins en partie en matière plastique armée, notamment renforcée par du tissu, par exemple un plastomère ou un élastomère, de préférence du chlorure de polyvinyle, caractérisé en ce qu'il est prévu dans les bandes de matériau (30, 36) des canaux (33, 42) supplémentaires, de préférence parallèles aux canaux de circulation (31, 37), dans lesquels est contenu un fluide liquide ou gazeux, de sorte que l'on peut modifier la forme extérieure des bandes de matériau (30, 36) et/ou la grandeur de la section droite des canaux de circulation (31, 37), non seulement en faisant varier la pression du fluide caloporteur dans les canaux de circulation (31, 37) mais aussi en faisant varier la pression du fluide dans les canaux (33, 42) dirigés de préférence parallèlement aux canaux de circulation.

5. Revêtement selon la revendication 4 caractérisé en ce qu'à chaque canal de circulation (37) est associé un canal (42) dans lequel est contenu le fluide pouvant être soumis à des pressions de valeurs différentes.

6. Revêtement selon la revendication 4 caractérisé en ce qu'à chaque canal (33) dans lequel est contenu le fluide pouvant être soumis à des pressions de valeurs différentes sont associés plusieurs canaux de circulation (31).

7. Revêtement selon la revendication 5 caractérisé en ce que les canaux de circulation (37) ont un
profil substantiellement analogue à celui d'une
goutte et en ce que chaque canal de circulation (37) est séparé par une cloison (41) longitudinale en matière flexible d'un canal (42) contenant le fluide pouvant être soumis à des pressions de valeurs différentes.

FIG. 1

FIG. 2

FIG. 3